(19) Europäisches Patentamt
European Patent Office
Office européen des brevets

(11) EP 2 725 828 B1

(12) **EUROPEAN PATENT SPECIFICATION**

(45) Date of publication and mention
of the grant of the patent:
**27.02.2019 Bulletin 2019/09**

(21) Application number: **12803756.1**

(22) Date of filing: **05.04.2012**

(51) Int Cl.:
*H04J 11/00* *(2006.01)*        *H04W 8/16* *(2009.01)*

(86) International application number:
**PCT/CN2012/073513**

(87) International publication number:
**WO 2013/000312 (03.01.2013 Gazette 2013/01)**

(54) **METHOD FOR AUTOMATIC SEARCH AND ADDITION OF NEIGHBOR CELLS BY TERMINAL IN LONG TERM EVOLUTION SYSTEM, AND SUCH TERMINAL**

VERFAHREN ZUR AUTOMATISCHEN SUCHE UND HINZUFÜGUNG VON NACHBARZELLEN ÜBER EIN ENDGERÄT IN EINEM LTE-SYSTEM UND DERARTIGES ENDGERÄT

PROCÉDÉ DE RECHERCHE ET D'AJOUT AUTOMATIQUE DE CELLULES VOISINES PAR UN TERMINAL DANS UN SYSTÈME À ÉVOLUTION À LONG TERME, ET TERMINAL CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2011 CN 201110174756**

(43) Date of publication of application:
**30.04.2014 Bulletin 2014/18**

(73) Proprietor: **ZTE Corporation**
**Shenzhen, Guangdong 518057 (CN)**

(72) Inventor: **LI, Bin**
**Shenzhen**
**Guangdong 518057 (CN)**

(74) Representative: **V.O.**
**P.O. Box 87930**
**2508 DH Den Haag (NL)**

(56) References cited:
CN-A- 101 365 223        CN-A- 101 820 321
US-A1- 2008 285 433      US-A1- 2009 323 855

• ILGYU KIM ET AL: "Sequence hopping cell search scheme for OFDM cellular systems", IEEE TRANSACTIONS ON WIRELESS COMMUNICATIONS, IEEE SERVICE CENTER, PISCATAWAY, NJ, US, vol. 7, no. 5, 1 May 2008 (2008-05-01), pages 1483-1489, XP011214989, ISSN: 1536-1276
• YUAN SHEN ET AL: "Neighboring Cell Search Techniques for LTE Systems", COMMUNICATIONS (ICC), 2010 IEEE INTERNATIONAL CONFERENCE ON, IEEE, PISCATAWAY, NJ, USA, 23 May 2010 (2010-05-23), pages 1-6, XP031703651, ISBN: 978-1-4244-6402-9
• NTT DOCOMO ET AL.: 'Three-Step Cell Search Method for E-UTRA' 3GPP TSG RAN WG1 MEETING #47, R1-063304 06 November 2006 - 10 November 2006, RIGA, LATVIA, XP050103750

## Description

## Technical field

The present invention relates to the communication field, in particular to a method for automatically searching and determing a neighbor cell by a terminal in a long term evolution (LTE) system, and a terminal thereof.

## Background

With the sustained development of the Third-generation mobile system (3G for short), the project of Long Term Evolution (LTE for short) is proposed in the 3rd Generation Partnership Project (3GPP for short); with the advantages of being able to obtain higher user data rate and to improve the system capacity and the degree of coverage, and reasonable and flexible frequency spectrum resource allocation, enabling LTE to be rapidly developed, there are a plurality of operators planning to deploy or deploying the LTE system.

In the LTE system, since the network becomes more complicated, a large amount of wireless parameters and data will greatly improve the workload of the network-optimization staff, but the operators want to reduce the operation expenditure and manual intervention. In this background, the properties of Self Organization Network (SON for short) are taken as an important research direction of 3GPP. SON is a concept proposed by mobile operators in the standardized stage of the LTE network, the main thought thereof is to realize some autonomous functions of the wireless network, so as to reduce the manual participation and operation expenditure.

SON is primarily divided into self-configuration, self-optimization and self-cure, three big functions. The function of self- optimization is to reduce the manual service workload and improve the network performance as far as possible by performing performance measurements on the user equipment (UE for short) and base station, and dynamically adjusting the wireless configuration parameters according to the measurement results, so as to realize automatic optimization of the LTE mobile communication network. A typical self-optimization case in LTE protocols comprises functions of Automatic Neighbor Relation (ANR for short), etc.

The ANR function mainly refers to the function of automatic detection, supplement, addition and deletion of neighbor relations. ANR is only partial function of SON, an ANR module in the base station self-adaptively finds neighbor cell of an existing cell by measurement report information provided to the base station by the UE and neighbor cell information transmitted via X2 port, and adds the found neighbor cells to a neighbor relation list in an automatic manner or in a manner of being controlled. The main purposes of the ANR function are: the base station automatically finds and maintains the integrity and viability of the neighbor relation list, so as to reduce call drop and improve the success rate of switch; reducing the human investment of network planning and network optimization, decreasing the operation expenditure and providing powerful supplement for network planning tools.

The ANR function enables the base station to dynamically find existing neighbor cells of a certain cell, and to accomplish the automatic addition process of the neighbor cells and optimize the neighbor relation according to system performance indexes; the process thereof mainly comprises the following steps:

1. neighbor cell discovery: a UE measures to obtain neighbor information about the cell where the UE is located, and reports the neighbor information to a base station;

2. neighbor cell addition: the base station and high level decide whether to add the neighbor information according to the relevant measurement information reported by the UE; and

3. neighbor cell optimization: the optimization and deletion of the neighbor cell list is accomplished by evaluating the relation between the existing cell list and the network performance.

In the prior art, the UE side accomplishes only the operation of reporting the neighbor information to the base station side, the operations of neighbor cell addition and neighbor cell optimization are both accomplished at the base station side; thus the workload of the base station side is greatly increased.

It is noted that the article entitled "Sequence hopping cell search scheme for OFDM cellular systems" by I. Kim et al. discloses a cell search scheme based on the frequency domain sequence hopping of synchronization channel symbols. It is further noted that patent publication US 2009/323855 discloses a method for generating a code sequence that can be used for acquisition of initial synchronization, cell detection and channel estimation in a mobile communication system.

## Summary

The embodiments of the present invention provide a method for automatically searching and determining a neighbor cell by a terminal in an LTE system, and a terminal thereof, so as to at least solve the problem in relevant technology of how to automatically search and determine a neighbor cell on a terminal side.

According to an aspect of the present invention, a method for automatically searching and determining a neighbor cell by a terminal in an LTE system is provided. The method comprises: step 1, for each reception antenna of the terminal itself, the terminal intercepts the data secondary synchronization sequence received on a downlink secondary synchronization channel by the reception antenna and takes the intercepted data as antenna data of the reception antenna, samples the antenna data and takes the sampled data as a first time domain data; the terminal converts data secondary synchronization sequences pre-stored by itself into time domain secondary synchronization sequences, and for each time domain secondary synchronization sequence, the terminal samples the time domain secondary synchronization sequence and takes the sampled data as a second time domain data of the time domain secondary synchronization sequence; step 2, for each second time domain data, the terminal performs a normalization operation on the second time domain data respectively with each first time domain data, and the terminal obtains a time domain relevant sequences; step 3, according to a preset combination method, the terminal combines the obtained time domain relevant sequences to obtain a combined time domain relevant sequence, wherein a position number of time domain data in the combined time domain relevant sequence corresponds to a cell identifier; and the terminal determines at least one cell identifier corresponding to a position number of time domain data, which is satisfying a preset condition, in the combined time domain relevant sequence; and step 4, the terminal determines at least one cell corresponding to the cell identifier to be the neighbor cell of a cell where the terminal is located.

Preferably, the step that for each reception antenna of the terminal itself, the terminal intercepts the data secondary synchronization sequence received on the downlink secondary synchronization channel by the reception antenna and takes the intercepted data as the antenna data of the reception antenna comprises that: for each reception antenna of the terminal itself, the terminal performs interception of time domain on the data secondary synchronization sequence received on the position of the downlink secondary synchronization channel by the reception antenna and takes the intercepted data as first interception data; interception of frequency domain is performed on the first interception data using a low-pass filter and the intercepted data is taken as a second interception data; and a segment of data, the length of which is a preset data length, is intercepted from the second interception data and is taken as the antenna data of the reception antenna.

Preferably, the normalization operation is performed according to the following formula:

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}} , \text{ where } Cor_k^t$$

is the time domain relevant sequences obtained after the normalization operation is performed on the second time domain data with the first time domain data; $1 \le k \le 504$, and k is an integer; t is the serial number of the reception antenna on the terminal, $1 \le t \le T$, and t is an integer; T is the number of the terminal reception antenna; r is the first time domain data; M is the ratio of the length of the data to the number of samples adopted when sampling; and $S_k$ is the second time domain data.

Preferably, that the terminal combines the obtained time domain relevant sequences according to a preset combination method to obtain the combined time domain relevant sequence comprises that: weighted combination is performed on the time domain relevant sequences according to the following formula to obtain the combined time domain relevant sequence $R_k$:

$$R_k = \sum_{t=1}^{T} \lambda_k^t Cor_k^t , \text{ where } 1 \le k \le 504, \text{ and k is an inte-}$$

ger; $Cor_k^t$ is the time domain relevant sequences obtained after the normalization operation is performed on the second time domain data with the first time domain data; $\lambda_k^t$ is a combination coefficient factor; t is the serial number of the reception antenna on the terminal, $1 \le t \le T$, and t is an integer; and T is the number of the reception antenna on the terminal.

Preferably, the time domain data, which is satisfying the preset condition, in the combined time domain relevant sequence is embodied as: the time domain data the value of which is greater than a neighbor cell decision threshold and the position number of which is not equal to the identifier of the cell where the terminal is located, wherein the neighbor cell decision threshold is the product of a coefficient $\alpha$ and a relevant coefficient of the cell where the terminal is located, with the coefficient $\alpha$ being data greater than 0 and smaller than 1, and with the relevant coefficient of the cell where the terminal is located being time domain data in the combined time domain relevant sequence, wherein the cell identifier corresponding to the position number of the time domain data is the cell identifier of the cell where the cell is located.

Preferably, the terminal determines at least one cell, corresponding to the cell identifier which is corresponding to the position number of the time domain data, which is satisfying the preset condition, in the combined time domain relevant sequence to be the neighbor cell of the cell where the terminal is located, and adds the cell identifier to a neighbor cell identifier list; or for data received at different moments by each reception antenna, step 1 to step 4 are repeated for L times; at least one neighbor cell corresponding to the cell identifier, which appears repeatedly for L times, is determined to be the neighbor cell of the cell where the terminal is located; and the cell identifier which has appeared repeatedly for L times is added to the neighbor cell identifier list.

According to another aspect of the present invention, a terminal is provided which comprises: an interception module, configured to, for each reception antenna of the terminal, intercept a data secondary synchronization sequence received on a downlink secondary synchronization channel by the reception antenna

and take the intercepted data as antenna data of the reception antenna, sample the antenna data and take the sampled data as a first time domain data; a conversion module, configured to convert data secondary synchronization sequences pre-stored by the terminal into time domain secondary synchronization sequences; a sampling module, configured to, for each time domain secondary synchronization sequence, sample the time domain secondary synchronization sequence and take the sampled data as a second time domain data of the time domain secondary synchronization sequence; an operation module, configured to, for each second time domain data, perform a normalization operation on the second time domain data respectively with each first time domain data, and obtain a time domain relevant sequences; a combination module, configured to combine the obtained time domain relevant sequence according to a preset combination method to obtain a combined time domain relevant sequence, wherein a position number of time domain data in the combined time domain relevant sequence is corresponding to a cell identifier; an identifier determination module, configured to determine at least one cell identifier corresponding to a position number of the time domain data element, which is satisfying a preset condition, in the combined time domain relevant sequence; and a determination module, configured to determine at least one cell corresponding to the cell identifier to be the neighbor cell of a cell where the terminal is located.

Preferably, the interception module comprises: a first interception module, configured to perform, for each reception antenna of the terminal, interception of time domain on the data secondary synchronization sequence received on the position of the downlink secondary synchronization channel by the reception antenna, and take the intercepted data as first interception data; a second interception module, configured to perform interception of frequency domain on the first interception data, and take the intercepted data as second interception data; and a third interception module, configured to intercept a segment of data, the length of which is a preset data length, from the second interception data as the antenna data of the reception antenna.

Preferably, the operation module is configured to, for each second time domain sequence, perform a normalization operation on the second time domain data respectively with each first time domain data according to the following formula to obtain a time domain relevant sequence $Cor_k$;

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}}$$, where $1 \leq k \leq$

504, and k is an integer; t is the serial number of the reception antenna on the terminal, $1 \leq t \leq T$, and t is an integer; T is the number of the reception antenna on the terminal; r is the first time domain data; M is the ratio of the length of the data to the number of samples adopted when sampling; and $S_k$ is the second time domain data.

Preferably, the combination module is configured to perform weighted combination on the time domain relevant sequences according to the following formula to obtain the combined time domain relevant sequence $R_k$: $R = \sum_{t=1}^{T} \lambda_k^t Cor_k^t$, where $1 \leq k \leq 504$, and

k is an integer; $Cor_k^t$ is the time domain relevant sequences obtained after the normalization operation is performed on the second time domain data with the first time domain data; $\lambda_k^t$ is a combination coefficient factor; t is the serial number of a reception antenna on the terminal, $1 \leq t \leq T$, and t is an integer; T is the number of the reception antenna on the terminal.

Preferably, the identifier determination module is configured to determine a time domain data element, in the combined time domain relevant sequence, the value of which is greater than a neighbor cell decision threshold and the position number of which is not equal to the identifier of the cell where the terminal is located, wherein the neighbor cell decision threshold is the product of the coefficient $\alpha$ and the relevant coefficient of the cell where the terminal is located, with the coefficient $\alpha$ being data greater than 0 and smaller than 1, and with the relevant coefficient of the cell where the terminal is located being time domain data in the combined time domain relevant sequence, wherein the cell identifier corresponding to the position number of the time domain data is the cell identifier of the cell where the cell is located.

Preferably, the determination module is configured to determine at least one cell corresponding to the cell identifier which is corresponding to the position number of the time domain data, which is satisfying the preset condition, in the combined time domain relevant sequence to be the neighbor cell of the cell where the terminal is located, and add the cell identifier to a neighbor cell identifier list; or for data received at different moments by each reception antenna, after the operation of search or determination of the neighbor cell has been repeatedly performed for L times, at least one neighbor cell corresponding to the cell identifier which has appeared repeatedly for L times, is determined to be the neighbor cell of the cell where the terminal is located; and the cell identifier, which has appeared repeatedly for L times, is added to the neighbor cell identifier list.

It can be seen that using the method provided by the embodiments of the present invention, a terminal respectively intercepts and samples data secondary synchronization sequences obtained by reception antennas of the terminal itself to obtain an abundance of first time domain data, converts and samples data secondary synchronization sequences stored by itself to obtain an abundance of second domain data at the same time, and obtains time domain relevant sequences according to the first time domain data and the second domain data; the terminal combines the time domain relevant sequences to obtain the combined time domain relevant sequence, then finds out, from the combined time domain relevant sequence, the time domain data the data value of which is greater than the neighbor cell decision threshold and the position number of which is not equal to the cell identifier of the cell where the terminal is located; and then at least one cell corresponding to the cell identifier, which is corresponding to the found time domain data, is determined to be a neighbor cell of the cell where the terminal is located. Hence, by means of the method provided in the embodiments of the present invention, the work of neighbor cell search and neighbor determination can be accomplished at the terminal side.

## Brief Description of the Drawings

Fig. 1 is a schematic diagram of the flow of a method for automatically searching and determining a neighbor cell by a terminal according to an embodiment of the present invention;
Fig. 2 is a schematic diagram of the structure of frame structure type 2 in an LTE standard;
Fig. 3 is a structural schematic diagram of a terminal according to an embodiment of the present invention; and
Fig. 4 is a structural schematic diagram of an interception module according to an embodiment of the present invention.

## Detailed Description of the Embodiments

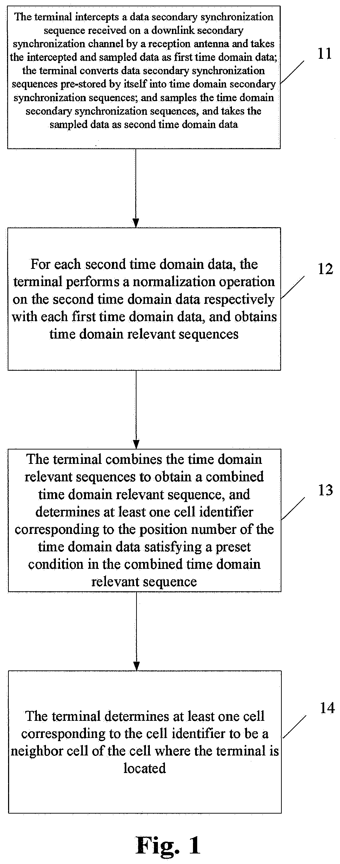

As shown in Fig. 1, a method for automatically searching and determining a neighbor cell by a terminal in an LTE system is provided by an embodiment of the present invention. A terminal intercepts and samples a plurality of data secondary synchronization sequences obtained by reception antennas of the terminal itself to obtain an abundance of first time domain data, converts and samples a plurality of data secondary synchronization sequences stored by itself to obtain an abundance of second time domain data at the same time, and obtains a plurality of time domain relevant sequences according to the first time domain data and the second time domain data. The terminal combines the time domain relevant sequences to obtain a combined time domain relevant sequence, then finds out, from the combined time domain relevant sequence, time domain data the data value of which is greater than a neighbor cell decision threshold and the position number of which is not equal to the cell identifier of the cell where the terminal is located; and then at least one cell corresponding to cell identifier is determined to be a neighbor cell of the cell where the terminal is located. The particular process is as follows:

step 11, for each reception antenna of the terminal itself, the terminal intercepts a data secondary synchronization sequence received on a downlink secondary synchronization channel by the reception antenna and takes the intercepted data as antenna data of the reception antenna, samples the antenna data and takes the sampled data as first time domain data; the terminal converts data secondary synchronization sequences pre-stored by itself into time domain secondary synchronization sequences; and for each time domain secondary synchronization sequence, the terminal samples the time domain secondary synchronization sequence, and takes the sampled data as second time domain data of the time domain secondary synchronization sequence;

step 12, the terminal, for each second time domain data, performs a normalization operation on the second time domain data respectively with each first time domain data, and obtains time domain relevant sequences;

step 13, according to a preset combination method, the terminal combines the obtained time domain relevant sequences to obtain a combined time domain relevant sequence, wherein a position number of time domain data in the combined time domain relevant sequence is corresponding to a cell identifier; the terminal determines at least one cell identifier corresponding to a position number of time domain data, which is satisfying a preset condition, in the combined time domain relevant sequence; and

step 14, the terminal determines at least one cell corresponding to the cell identifier to be the neighbor cell of the cell where the terminal is located.

Particularly, in step 11, the particular method that for each reception antenna of the terminal itself, the terminal intercepts the data secondary synchronization sequence received on the downlink secondary synchronization channel by the reception antenna, and takes the intercepted data as the antenna data of the reception antenna is:

for each reception antenna of the terminal itself, the terminal performs interception of time domain on the data secondary synchronization sequence received on the position of the downlink secondary synchronization channel by the reception antenna, and takes the intercepted data as first interception data; the terminal performs interception of frequency domain on the first interception data using a low-pass filter, and takes the intercepted data as second interception data; and a segment of data, the length of which is a preset data length, is intercepted from the second interception data as the antenna data of the reception antenna;

it is relatively preferred that the low-pass filter is a low-pass filter the cut-off frequency of which is 1.08 MHZ; the preset data length is the sum of the bandwidth value of the system bandwidth and the value of a cyclic prefix (CP); the number of the sample adopted when sampling the antenna data and the time domain secondary synchronization sequence is: 1 or 2 or 4 or 8 or 16;

particularly, in step 11, the terminal converts the pre-stored data secondary synchronization sequences into time domain secondary synchronization sequences according to the following method:

the terminal performs Fourier transform on the data secondary synchronization sequence, and adds a cyclic prefix (CP) to each data element in the transformed data secondary synchronization sequence to generate the time domain secondary synchronization sequence;

particularly, in step 12, the normalization operation is performed according to the following formula: 

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}},$$

where $Cor_k^t$ is the time domain relevant sequences obtained after normalization operation is performed on the second time domain data with the first time domain data; $1 \leq k \leq 504$, and k is an integer; and it is relatively preferred that the particular value of k is the ID value of the cell where the terminal is located plus 1; t is the serial number of the reception antenna on the terminal, $1 \leq t \leq T$, and t is an integer; T is the number of the reception antenna on the terminal; r is the first time domain data; M is the ratio of the length of the first/second time domain data to the number of samples adopted when sampling; and $S_k$ is the second time domain data;

particularly, in step 13, the terminal may combine the obtained time domain relevant sequences to obtain the combined time domain relevant sequence according to the preset combination method, according to the following method:

weighted combination is performed on the time domain relevant sequences according to the following formula to obtain the combined time domain relevant sequence $R_k$:

$$R_k = \sum_{t=1}^{T} \lambda_k^t Cor_k^t, \text{ where } 1 \leq k \leq 504, \text{ and}$$

k is an integer; and it is relatively preferred that the particular value of k is the ID value of the cell where the terminal is located plus 1; $Cor_k^t$ is the time domain relevant sequences obtained after normalization operation is performed on the second time domain data with the first time domain data; $\lambda_k^t$ is the combination coefficient factor; t is the serial number of the reception antenna on the terminal, $1 \leq t \leq T$, and t is an integer; and T is the number of the reception antenna on the terminal;

it is relatively preferred that the combination method that may be used includes but is not limited to gain-equal combination and maximum ratio combination, and the combination coefficient factor is $\lambda_k^t = \frac{1}{T}$ when using gain-equal combination; and when using maximum ratio combination, the combination coefficient factor is proportional to signal noise ratio of data-receiving of each end;

particularly, in step 13, the particular method for determining the time domain data satisfying the preset condition in the combined time domain relevant sequence is:

the time domain data the value of which is greater than a neighbor cell decision threshold and the position number of which is not equal to the identifier of the cell where the terminal is located; the neighbor cell decision threshold is the product of the coefficient $\alpha$ and the relevant coefficient of the cell where the terminal is located, wherein the coefficient $\alpha$ is greater than 0 and smaller than 1, and the relevant coefficient of the cell where the terminal is located is time domain data in the combined time domain relevant sequence, and the cell identifier corresponding to the position number of the time domain data is the cell identifier of the cell where the cell is located;

particularly, in step 14, the method that the terminal determines at least one cell corresponding to the cell identifier to be the neighbor cell of the cell where the terminal is located may be one of the following methods:

the first one, the terminal determines at least one cell, corresponding to the cell identifier which is obtained in step 13 to be the neighbor cell of the cell where the terminal is located, and adds the cell identifier to the neighbor cell identifier list; and

the second one, for data received at different moments by each reception antenna, step 11 to step 14 are repeated for L times; at least one neighbor cell corresponding to the cell identifier, which has appeared repeatedly for L times, is determined to be the neighbor cell of the cell where the terminal is located; and the cell identifier which has appeared repeatedly for L times is added to the neighbor cell identifier list; and it is relatively preferred that L = 3.

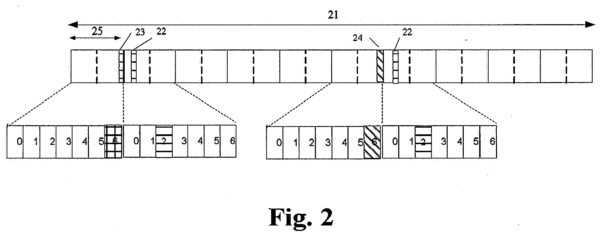

It is stipulated in the LTE standard that the downlink synchronization channel includes the primary synchronization channel (P_SCH) and the secondary synchronization channel (S_SCH); the frame structure type 2 in the above-mentioned two kinds of signals is as shown in Fig. 2; 21 is a wireless frame, and a wireless frame comprises 10 subframes 25, and also comprises two same P-SCHs 22, and two different S-SCHs which are respectively S-SCH 23 and S-SCH 24, and the numbers of subframes 25 start from 0, i.e., subframe 0, subframe 1, ... subframe 9; the time domain positions of the two same P-SCHs 22 are respectively the 3rd sign in subframe 1 and subframe 6; the time domain position of S-SCH 23 is the 6th sign in subframe 0, and the time domain position of S-SCH 24 is the 6th sign in subframe 5.

Introduction is made below by means of particular embodiments:

embodiment 1:

A method for automatically searching and determining a neighbor cell by a terminal in an LTE system is provided by an embodiment of the present invention. In the method, automatically searching a neighbor cell may be performed on the terminal side, and the searched neighbor cell is determined to be a neighbor cell of the cell where the terminal is located. With this method, the workload of the base station side can be greatly reduced, and the particular steps thereof are as follows:

step 1: for each reception antenna of the terminal itself, the terminal intercepts a data secondary synchronization sequence received on a downlink secondary synchronization channel by the reception antenna and takes the intercepted data as antenna data of the reception antenna, samples the antenna data and takes the sampled data as first time domain data; and the particular method of the step is as follows:

for each reception antenna of the terminal itself, the terminal performs interception of time domain on the data secondary synchronization sequence received on the position of the downlink secondary synchronization channel by the reception antenna, and takes the intercepted data as first interception data; the terminal performs interception of frequency domain on the first interception data using a low-pass filter, and takes the intercepted data as second interception data; and the terminal intercepts a segment of data, the length of which is a preset data length, from the second interception data as the antenna data of the reception antenna; the antenna data is sampled, and the sampled data is taken as the first time domain data;

particularly, the method for performing the interception of time domain on the data secondary synchronization sequence is as follows:

data of the secondary synchronization sequence on an orthogonal frequency division multiplexing (OFDM) sign is intercepted to be the first interception data;

particularly, the method for using the low-pass filter to perform interception of frequency domain on the first interception data comprises:

the data, of the first interception data, on the system bandwidth frequency domain is intercepted using the low-pass filter the cut-off frequency of which is 1.08 MHZ; and the intercepted data is taken as the second interception data; a segment of data the length of which is a preset data length K from the second interception data is intercepted as the antenna data of the reception antenna; and the antenna data is sampled, and the particular sampling method is: extraction is performed every preset extraction interval number, i.e.,

sampling number F, and the sampled data is taken as the first time domain data of the reception antenna;

particularly, the value range of F is any number value in [1, 2, 4, 8, 16]; for example, when the first time domain data is {1, 2, 3, 4, 5, 6, 7, 8, 9}, and F = 2, after the extraction is performed the first time domain data is {3, 6, 9}, and the length of the first time domain data is M = K/F;

it is relatively preferred that the preset data length K is the sum of the bandwidth value (BW) of the system bandwidth and the value of the cyclic prefix (CP); for example, in a normalcp, the bandwidth of the system bandwidth BW = 20 M, then K = 2048 + 144; BW = 10 M, then K = 1024 + 72; BW = 5 M, then K = 512 + 36;

step 2, the terminal performs Fourier transform on all the 504 data secondary synchronization sequences (SSSs) pre-stored by itself and adds a CP to each data element in the transformed secondary synchronization sequences to generate time domain secondary synchronization sequences, and samples each generated time domain secondary synchronization sequence to obtain the second time domain data $S_k$ of the time domain secondary synchronization sequence; $1 \le k \le 504$, and k is an integer, and it is relatively preferred that the particular value of k is the ID value of the cell where the cell is located plus 1; and the serial numbers of sequence $s_k$ correspond to the serial numbers of the SSS sequence in a mapping manner; the terminal samples the generated time domain secondary synchronization sequence, i.e., extraction is performed every preset extraction interval number, i.e., sampling number F, and takes the extracted data as the second time domain data;

step 3, for each second time domain data, the terminal performs normalization operation on the second time domain data respectively with each first time domain data, and the terminal obtains time domain relevant sequences; and it is relatively preferred that the normalization operation can be performed through the following formula:

$$Cor_k^t = \frac{\left|\sum_{m=1}^{M} r_t^*(m) \cdot S_k(m)\right|}{\sqrt{\left|\sum_{m=1}^{M} r_t(m)\right|^2 \cdot \left|\sum_{m=1}^{M} S_k(m)\right|^2}}$$

where $Cor_k^t$ is the time domain relevant sequences obtained after normalization operation is performed on the second time domain data with the first time domain data; $1 \le k \le 504$, and k is an integer; and it is relatively preferred that the particular value of k is the ID value of the cell where the terminal is located plus 1; and the serial numbers of the sequence $s_k$ correspond to the serial numbers of the SSS sequence in a mapping manner; t is the serial number of the reception antenna on the terminal, $1 \le t \le T$, and t is an integer; T is the number of the reception antenna on the terminal; r is the first time domain data; M is the ratio of the length of the data to the number of samples adopted when sampling; and $S_k$ is the second time domain data;

step 4, weighted combination is performed on the time domain relevant sequences $Cor_k^t$ obtained in step 3 according to a preset combination method, i.e., according to the following formula, to obtain a combined time domain relevant sequence $R_k$;

$$R_k = \sum_{t=1}^{T} \lambda_k^t Cor_k^t$$

where the value of k is the ID value of the cell where the terminal is located plus 1, and the range thereof is between 1 and 504; and the serial numbers of the sequence $s_k$ correspond to the serial numbers of the SSS sequence in a mapping manner; $Cor_k^t$ is the time domain relevant sequences obtained after the normalization operation is performed on the second time domain data with the first time domain data; $\lambda_k^t$ is the combination coefficient factor; t is the serial number of the reception antenna on the terminal, $1 \le t \le T$, and t is an integer; and T is the number of the reception antenna on the terminal;

it is relatively preferred that the combination method that can be chosen in this step is gain-equal combination or maximum ratio combination, and the combination coefficient factor is $\lambda_k^t = \frac{1}{T}$ when the chosen combination method is gain-equal combination; and when the maximum ratio combination method is used, the combination coefficient factor is proportional to signal noise ratio of data-receiving of each end;

particularly, the serial number of the time domain data in the combined time domain relevant sequence corresponds to a cell identifier; for example, the combined time domain relevant sequence is $\{k_1,k_2,....k_n\}$, where n is the total number of the time domain data in the combined time domain relevant sequence; the serial numbers of the time domain data in the combined time domain relevant sequence can be sorted in a plurality of manners, for example, it can be sorted starting from 1, then the position number of $k_2$ is 2, and the cell identifier corresponding to $k_2$ is 2; there may be a plurality of cell identifiers, and it is relatively preferred that the ID value of the cell can be taken as the cell identifier, and then the ID value of the cell is 2;

therefore, the time domain data the serial number of which is $k_{cell}$ + 1 is found from R and is taken as the relevant coefficient $R_{k-cell}$ of the cell where the current cell terminal is located according to the ID value $k_{cell}$ of the cell where the terminal is located; i.e., the position number of the time domain data in R is the ID value of the cell, for example, when $R_k$ is $\{k_1, k_2, k_3, k_4, k_6.... k_{18}\}$, the serial number of the time domain data $k_3$ in $R_k$ is 3, and the serial number of $k_4$ is 4; and so forth, when $k_{cell}$ is 5, $R_{k-cell}$ is $k_6$;

step 5, at least one cell identifier corresponding to the position number of the time domain data, which is satisfying the preset condition, in the combined time domain relevant sequence is determined;
in this step, the time domain data, which is satisfying the preset condition, in the combined time domain relevant sequence is:

the time domain data the value of which is greater than a neighbor cell decision threshold, and the position number of which is not equal to the identifier of the cell where the terminal is located; and
the neighbor cell decision threshold $R_{Thr}$ is the product of the coefficient $\alpha$ and the relevant coefficient of the cell where the terminal is located, i.e., $R_{Thr} = \alpha R_{k-cell}$; the coefficient $\alpha$ is the data greater than 0 and smaller than 1; and the relevant coefficient of the cell where the terminal is located is time domain data in the combined time domain relevant sequence, and the cell identifier corresponding to the position number of the time domain data is the cell identifier of the cell where the terminal is located; and particularly, $\alpha$ can

be obtained by simulation; at least one position number corresponding to other time domain data exceeding this neighbor cell decision threshold, except $R_{k-cell}$, is found in R; and the value of the position number subtracting one is measured ID value of the neighbor cell, i.e., the cell identifier of the neighbor cell;

step 6, the terminal determines at least one cell corresponding to the cell identifier obtained in step 4 to be a neighbor cell of the cell where the terminal is located; and
it is relatively preferred that step 6 can comprise the following method:
the terminal determines the cell corresponding to the cell identifier obtained in step 5 to be the neighbor cell of the cell where the terminal is located, and adds the cell identifier to the neighbor cell identifier list.

embodiment 2:

An embodiment of the present invention provides a preferred method for automatically searching and determining a neighbor cell by a terminal in an LTE system; with this method, automatic search of a neighbor cell can be performed on a terminal side for a plurality of times, and the cell corresponding to a cell identifier, which is found out every time, i.e. the ID value of the cell, can be determined to be a neighbor cell of the cell where the terminal is located after the plurality of search operations; and with this method, the workload on the base station side can be greatly reduced, and the particular steps thereof are as follows:
the terminal repeats step 1 to step 5 for L times respectively at different moments, and adds to a neighbor cell identifier list the cell identifier corresponding to the position number of time domain data, which is satisfying the preset condition, in the combined time domain relevant sequence, i.e., the cell ID, after each process of step 1 to step 5; and the particular step is as follows:

when L = 3, the neighbor cell identifier list comprises $\{k_1,k_3,k_{123},k_{234},k_{456}\}$ after the first search; the neighbor cell identifier list comprises $\{k_1,k_3,k_{123},k_{234},k_{456}\}$ and $\{k_1,k_5,k_{123},k_{456}\}$ after the second search; and the neighbor cell identifier list comprises $\{k_1,k_3,k_{123},k_{234},k_{456}\}$, $\{k_1, k_5,k_{123},k_{456}\}$ and $\{k_1,k_5,k_{18},k_{213},k_{123},k_{504}\}$ after the third search; and then the finally measured cell identifiers which appear repeatedly for L times are $\{k_1,k_{123}\}$;

step 6, the terminal determines at least one neighbor cell corresponding the cell identifier which has repeatedly appeared for L times to be the neighbor cell of the cell where the terminal is located, and adds the cell identifier which has appeared repeatedly for L times to the neighbor cell identifier list; i.e., the cells corresponding to cell identifiers $k_1,k_{123}$ are deter-

mined to be the neighbor cells of the cell where the terminal is located, and then the IDs of the obtained neighbor cell are 0 and 122.

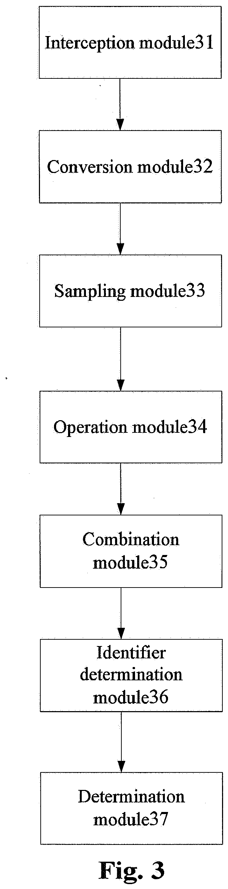

As shown in Fig. 3, an embodiment of the present invention provides a terminal, and the terminal comprises:

an interception module 31,configured to, for each reception antenna of the terminal, intercept a data secondary synchronization sequence received on a downlink secondary synchronization channel by the reception antenna and take the intercepted data as antenna data of the reception antenna, sample the antenna data and take the sampled data as first time domain data;

a conversion module 32, connected to the interception module 31, and configured to convert data secondary synchronization sequences pre-stored by the terminal into time domain secondary synchronization sequences;

a sampling module 33, connected to the conversion module 32, and configured to, for each time domain secondary synchronization sequence, sample the time domain secondary synchronization sequence, and take the sampled data as a second time domain data of the time domain secondary synchronization sequence;

an operation module 34, connected to the sampling module 33, and configured to, for each second time domain data, perform a normalization operation on the second time domain data respectively with each first time domain data, and obtain time domain relevant sequences;

a combination module 35, connected to the operation module 34, and configured to combine the obtained time domain relevant sequences according to a preset combination method to obtain a combined time domain relevant sequence, wherein a position number of time domain data in the combined time domain relevant sequence is corresponding to a cell identifier;

an identifier determination module 36, connected to the combination module 35, and configured to determine at least one cell identifier corresponding to a position number of time domain data, which is satisfying a preset condition, in the combined time domain relevant sequence; and

a determination module 37, connected to the identifier determination module 36, and configured to determine at least one cell corresponding to the cell identifier to be the neighbor cell of a cell where the terminal is located.

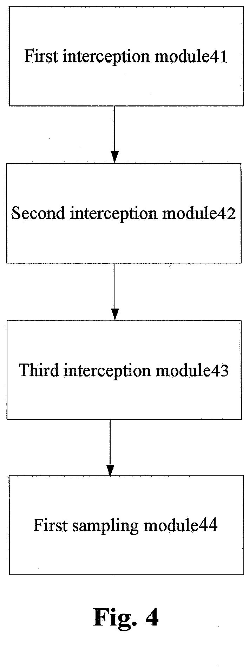

As shown in Fig. 4, the interception module 31 comprises:

a first interception module 41, configured to, for each reception antenna of the terminal, perform interception of time domain on the data secondary synchronization sequence received on the position of the downlink secondary synchronization channel by the reception antenna and take the intercepted data as a first interception data;

a second interception module 42, connected with the first interception module 41, and configured to perform interception of frequency domain on the first interception data and take the intercepted data as second interception data;

a third interception module 43, connected with the second interception module 42, and configured to intercept a segment of data, the length of which is a preset data length, from the second interception data as the antenna data of the reception antenna; and

a first sampling module 44, connected with the third interception module 43, and configured to sample the antenna data, and take the sampled data as the first time domain data of the reception antenna.

The conversion module 32 is configured to perform Fourier transform on data secondary synchronization sequences respectively, and add a cyclic prefix (CP) to each data in the transformed data secondary synchronization sequences to generate the time domain secondary synchronization sequences.

The operation module 34 is configured to, for each second time domain data, perform a normalization operation on the second time domain data respectively with each first time domain data according to the following formula to obtain time domain relevant sequences

$$Cor_k^t \; ; \; Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}} \; , \; where$$

$1 \le k \le 504$, and k is an integer; and it is relatively preferred that the particular value of k is the ID value of the cell where the terminal is located plus 1; t is the serial number of the reception antenna on the terminal, $1 \le t \le T$, and t is an integer; T is the number of the reception antenna on the terminal; r is the first time domain data; M is the ratio of the length of the data to the number of samples adopted when sampling; and $S_k$ is the second time domain data.

The combination module 35 is configured to perform weighted combination on the time domain relevant sequences according to the following formula to obtain the combined time domain relevant sequence $R_k$ :

$$R_k = \sum_{t=1}^{T} \lambda_k^t Cor_k^t$$ , where $1 \le k \le 504$, and k is an integer; and it is relatively preferred that the particular value of k is the ID value of the cell where the terminal is located plus 1; $Cor_k^t$ is the time domain relevant sequences obtained after the normalization operation is performed on the second time domain data with the first time domain data; $\lambda_k^t$ is a combination coefficient factor; t is the serial number of the reception antenna on the terminal, $1 \le t \le T$, and t is an integer; T is the number of the reception antenna on the terminal.

The identifier determination module 36 is configured to determine the time domain data, in the combined time domain relevant sequence, the value of which is greater than a neighbor cell decision threshold and the position number of which is not equal to the identifier of the cell where the terminal is located, wherein the neighbor cell decision threshold is the product of a coefficient $\alpha$ and a relevant coefficient of the cell where the terminal is located, with the coefficient $\alpha$ being data greater than 0 and smaller than 1, and with the relevant coefficient of the cell where the terminal is located being the time domain data in the combined time domain relevant sequence, wherein the cell identifier corresponding to the position number of the time domain data element is the cell identifier of the cell where the cell is located.

The determination module 37 is configured to determine at least one cell corresponding to the cell identifier which is corresponding to the position number of the time domain data, which is satisfying the preset condition, in the combined time domain relevant sequence, to be the neighbor cell of the cell where the terminal is located, and to add the cell identifier to a neighbor cell identifier list; or

for data received at different moments by each reception antenna, after the operation of search or determination of the neighbor cells has been repeatedly performed for L times, at least one neighbor cell corresponding to the cell identifier which has appeared repeatedly for L times, is determined to be the neighbor cell of the cell where the terminal is located; and the cell identifier, which has appeared repeatedly for L times, is added to the neighbor cell identifier list.

In summary, the beneficial effects of the present invention are:

it can be seen that using the method provided by the embodiments of the present invention, a terminal respectively intercepts and samples data secondary synchronization sequences obtained by reception antennas of itself to obtain first time domain sequences, converts and samples data secondary synchronization sequences stored by itself to obtain second domain sequences at the same time, and obtains a time domain relevant sequence according to the first time domain sequences and the second domain sequences; the terminal combines the time domain relevant sequence to obtain the combined time domain relevant sequence, then finds out, from the combined time domain relevant sequence, a time domain data element the data value of which is greater than the neighbor cell decision threshold and the serial number of which is not equal to the cell identifier of the cell where the terminal is located, and then determines at least one cell corresponding to the cell identifier, which is corresponding to the found time domain data element, to be a neighbor cell of the cell where the terminal is located. Hence, by means of the method provided in the embodiments of the present invention, the work of neighbor cell search and neighbor determination can be accomplished at the terminal side.

Those skilled in the art should understand that what can be provided by the embodiments of the present invention are a method, a system, or a computer program product. Therefore, the present invention may take the form of an entire hardware embodiment, an entire software embodiment, or an embodiment combining software and hardware aspects. In addition, the present invention may take the form of a computer program product which is implemented on one or more computer-usable storage media (including but not limited to a disk memory, CD-ROM, and optical memory, etc.) containing computer-usable program codes.

The present invention is described with reference to a flowchart and/or a block diagram of a computer program product, an apparatus (system), and a method. It should be understood that each flow and/or block in the flowchart and/or the block diagram as well as combination of flows and/or blocks in the flowchart and/or the block diagram may be implemented via computer program instructions. These computer program instructions may be provided to a general computer, dedicated computer, embedded processor, or the processor of other programmable data processing apparatuses, to generate a machine, such that a device used to implement the function designated in one or more flows in the flowchart and/or one or more blocks in the block diagram is generated through instructions executed by the processor of other programmable data processing apparatuses or a computer.

These computer program instructions can also be stored in computer readable storage capable of guiding a computer or other programmable data processing apparatuses to operate in a certain way, such that the instructions stored in the computer readable storage generate a manufacture including an instruction device which implements the function designated in one or more flows in the flowchart and/or one or more blocks in the block diagram.

These computer program instructions can also be loaded onto a computer or other programmable data processing apparatuses, so as to execute a series of operational steps on the computer or other programmable data processing apparatuses to generate computer-implemented processing, therefore the instructions executed on the computer or other programmable apparatuses provide the steps for implementing the function designated in one or more flows in the flowchart and/or one or more blocks in the block diagram.

**Claims**

1. A method for automatically searching and determining a neighbor cell by a terminal in an LTE system, comprising:

    step 1 (step 11), for each reception antenna of the terminal itself, the terminal intercepting a data secondary synchronization sequence received on a downlink secondary synchronization channel by the reception antenna and taking the intercepted data as antenna data of the reception antenna, sampling the antenna data and taking the sampled data as first time domain data; converting data secondary synchronization sequences pre-stored by the terminal into time domain secondary synchronization sequences using Fourier transform; for each time domain secondary synchronization sequence, sampling the time domain secondary synchronization sequence, and taking the sampled data as second time domain data of the time domain secondary synchronization sequence;
    step 2 (step 12), for each second time domain data, the terminal performing a normalization operation on the second time domain data respectively with each first time domain data, and the terminal obtaining time domain relevant sequences;
    step 3 (step 13), according to a preset combination method, the terminal combining the obtained time domain relevant sequences to obtain a combined time domain relevant sequence, wherein a position number of time domain data in the combined time domain relevant sequence is corresponding to a cell identifier; and determining at least one cell identifier corresponding to a position number of time domain data, which is satisfying a preset condition, in the combined time domain relevant sequence, wherein the preset combination method comprises: a gain-equal combination method or a maximum ratio combination method, and when the preset combination method is the gain-equal combination method, the combination coefficient factor is $\lambda_k^t = \dfrac{1}{T}$, wherein t is the serial number of the reception antenna on the terminal, $1 \leq t \leq T$, t is an integer, and T is the number of the reception antenna on the terminal; and when the preset combination method is the maximum ratio combination method, the combination coefficient factor is proportional to signal noise ratio of data-receiving of each end;
    wherein the time domain data, which is satisfying the preset condition, in the combined time domain relevant sequence is embodied as:
    the time domain data the value of which is greater than a neighbor cell decision threshold, and the position number of which is not equal to the identifier of the cell where the terminal is located, wherein the neighbor cell decision threshold is the product of a coefficient $\alpha$ and a relevant coefficient of the cell where the terminal is located, with the coefficient $\alpha$ being data greater than 0 and smaller than 1, and with the relevant coefficient of the cell where the terminal is located being time domain data in the combined time domain relevant sequence; and
    step 4 (step 14), the terminal determining at least one cell corresponding to the cell identifier to be the neighbor cell of a cell where the terminal is located;
    **characterized in that** the terminal determines at least one cell, corresponding to the cell identifier which is corresponding to the position number of the time domain data, which is satisfying the preset condition, in the combined time domain relevant sequence, to be the neighbour cell of the cell where the terminal is located, and adds the cell identifier to a neighbour cell identifier list; or
    for data received at different moments by each reception antenna, step 1 to step 4 are repeated for L times; at least one neighbour cell corresponding to the cell identifier, which appears repeatedly for L times, is determined to be the neighbor cell of the cell where the terminal is located; and the cell identifier which has appeared repeatedly for L times is added to the neighbour cell identifier list.

2. The method for automatically searching and determining the neighbor cell by the terminal in the LTE system according to claim 1, **characterized in that** for each reception antenna of the terminal itself, the terminal intercepting the data secondary synchronization sequence received on the downlink secondary synchronization channel by the reception antenna and taking the intercepted data as the antenna data of the reception antenna comprises:
    for each reception antenna of the terminal itself, the terminal performs interception of time domain on the data secondary synchronization sequence received on the position of the downlink secondary synchronization channel by the reception antenna, and takes the intercepted data as first interception data; interception of frequency domain is performed on the first interception data using a low-pass filter, and the intercepted data is taken as second interception data; and a segment of data, the length of which is a preset data length, is intercepted from the second interception data and is taken as the antenna data of the reception antenna.

3. The method for automatically searching and determining the neighbor cell by the terminal in the LTE system according to claim 2, **characterized in that** the normalization operation is performed according to the following formula:

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}} \; , \quad \text{where}$$

$Cor_k^t$ is the time domain relevant sequences obtained after the normalization operation is performed on the second time domain data with the first time domain data; $1 \le k \le 504$, and k is an integer; t is the serial number of the reception antenna on the terminal, $1 \le t \le T$, and t is an integer; T is the number of the reception antenna on the terminal; r is the first time domain data; M is the ratio of the length of the data to the number of samples adopted when sampling; and $S_k$ is the second time domain data.

4. The method for automatically searching and determining the neighbor cell by the terminal in the LTE system according to claim 1, **characterized in that** the terminal combining the obtained time domain relevant sequences according to the preset combination method to obtain the combined time domain relevant sequence comprises:

performing weighted combination on the time domain relevant sequences according to the following formula to obtain the combined time domain relevant sequence $R_k$:

$$R_k = \sum_{t=1}^{T} \lambda_k^t Cor_k^t \text{, where } 1 \le k \le 504 \text{, and k is an}$$

integer; $Cor_k^t$ is the time domain relevant sequences obtained after the normalization operation is performed on the second time domain data with the first time domain data.

5. The method for automatically searching and determining of the neighbor cell by the terminal in the LTE system according to claim 1, **characterized in that** the cell identifier corresponding to the position number of the time domain data is the cell identifier of the cell where the terminal is located.

6. A terminal, comprising:

an interception module (31), configured to, for each reception antenna of the terminal, intercept a data secondary synchronization sequence received on a downlink secondary synchronization channel by the reception antenna and take the intercepted data as antenna data of the reception antenna, sample the antenna data and take the sampled data as first time domain data; a conversion module (32), configured to convert data secondary synchronization sequences pre-stored by the terminal into time domain secondary synchronization sequences using Fourier transform; a sampling module (33), configured to, for each time domain secondary synchronization sequence, sample the time domain secondary synchronization sequence, and take the sampled data as second time domain data of the time domain secondary synchronization sequence; an operation module (34), configured to, for each second time domain data, perform a normalization operation on the second time domain data respectively with each first time domain data, and obtain time domain relevant sequences; a combination module (35), configured to combine the obtained time domain relevant sequences according to a preset combination method to obtain a combined time domain relevant sequence, wherein a position number of time domain data in the combined time domain relevant sequence is corresponding to a cell identifier, wherein the preset combination method comprises: a gain-equal combination method or a maximum ratio combination method, and when the preset combination method is the gain-equal combination method, the combination coeffi-

cient factor is $\lambda_k^t = \dfrac{1}{T}$ wherein t is the serial number of the reception antenna on the terminal, $1 \le t \le T$, t is an integer, and T is the number of the reception antenna on the terminal; and when the preset combination method is the maximum ratio combination method, the combination coefficient factor is proportional to signal noise ratio of data-receiving of each end; an identifier determination module (36), configured to determine at least one cell identifier corresponding to a position number of time domain data, which is satisfying a preset condition, in the combined time domain relevant sequence, wherein the identifier determination module (36) is further configured to determine the time domain data, in the combined time domain relevant sequence, the value of which is greater than a neighbour cell decision threshold and the position number of which is not equal to the identifier of the cell where the terminal is located, wherein the neighbour cell decision threshold is the product of a coefficient $\alpha$ and a relevant coefficient of the cell where the terminal is located, with the coefficient $\alpha$ being data greater than 0 and smaller than 1, and with the relevant coefficient of the cell where the terminal is located being time domain data in the combined time domain relevant sequence; and

a determination module (37), configured to determine at least one cell corresponding to the cell identifier to be the neighbor cell of a cell where the terminal is located;

**characterized in that** the determination module (37) is configured to determine at least one cell, corresponding to the cell identifier which is corresponding to the position number of the time domain data, which is satisfying the preset condition in the combined time domain relevant sequence, to be the neighbour cell of the cell where the terminal is located, and to add the cell identifier to a neighbour cell identifier list; or for data received at different moments by each reception antenna, after the operation of search or determination of the neighbour cell has been repeatedly performed for L times, at least one neighbour cell corresponding to the cell identifier which has appeared repeatedly for L times, is determined to be the neighbour cell of the cell where the terminal is located; and the cell identifier, which has appeared repeatedly for L times, is added to the neighbour cell identifier list.

7. The terminal as according to claim 6, **characterized in that** the interception module comprises:

a first interception module (41), configured to perform, for each reception antenna of the terminal, interception of time domain on the data secondary synchronization sequence received on the position of the downlink secondary synchronization channel by the reception antenna, and take the intercepted data as first interception data;

a second interception module (42), configured to perform interception of frequency domain on the first interception data, and take the intercepted data as second interception data; and

a third interception module (43), configured to intercept a segment of data, the length of which is a preset data length, from the second interception data as the antenna data of the reception antenna.

8. The terminal according to claim 6, **characterized in that** the operation module (34) is configured to, for each second time domain sequence, perform a normalization operation on the second time domain data respectively with each first time domain data according to the following formula to obtain a time domain relevant sequence

$$Cor_k^t; \quad Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}},$$

where $1 \leq k \leq 504$, and k is an integer; t is the serial number of a reception antenna on the terminal, $1 \leq t \leq T$, and t is an integer; T is the number of the reception antenna of the terminal; r is the first time domain data; M is the ratio of the length of the data to the number of samples adopted when sampling; and $S_k$ is the second time domain data.

9. The terminal according to claim 6, **characterized in that** the combination module (35) is configured to perform weighted combination on the time domain relevant sequences according to the following formula to obtain the combined time domain relevant sequence $R_k$:

$$R_k = \sum_{t=1}^{T} \lambda_k^t Cor_k^t, \text{ where } 1 \leq k \leq 504, \text{ and k is an}$$

integer; $Cor_k^t$ is the time domain relevant sequences obtained after the normalization operation is performed on the second time domain data with the first time domain data.

10. The terminal according to claim 6, **characterized in that** the cell identifier corresponding to the position number of the time domain data is the cell identifier of the cell where the cell is located.

**Patentansprüche**

1. Verfahren zur automatischen Suche und Bestimmung einer Nachbarzelle durch ein Endgerät in einem LTE-System, umfassend, dass:

Schritt 1 (Schritt 11), das Endgerät für jede Empfangsantenne des Endgeräts selbst eine Daten-Sekundärsynchronisationsfolge, die durch die Empfangsantenne auf einem Downlink-Sekundärsynchronisationskanal empfangen wird, abfängt und die abgefangenen Daten als Antennendaten der Empfangsantenne nimmt, die Antennendaten abtastet und die abgetasteten Daten als erste Zeitdomänendaten nimmt; Daten-Sekundärsynchronisationsfolgen, die durch das Endgerät vorgespeichert werden, unter Verwendung einer Fourier-Transformation in Zeitdomänen-Sekundärsynchronisationsfolgen umwandelt; für jede Zeitdomänen-Sekundärsynchronisationsfolge die Zeitdomänen-Sekundärsynchronisationsfolge abtastet und die abgetasteten Daten als zweite Zeitdomänendaten der Zeitdomänen-Sekundärsynchronisationsfolge nimmt;

Schritt 2 (Schritt 12), das Endgerät für alle zweiten Zeitdomänendaten jeweils eine Normalisierungsoperation an den zweiten Zeitdomänendaten mit allen ersten Zeitdomänendaten durchführt, und das Endgerät zeitdomänenrelevante Folgen erhält;

Schritt 3 (Schritt 13), das Endgerät die erhaltenen zweitdomänenrelevanten Folgen gemäß einem vorgegebenen Kombinationsverfahren kombiniert, um eine kombinierte zeitdomänenrelevante Folge zu erhalten, wobei eine Positionsnummer von Zeitdomänendaten in der kombinierten zeitdomänenrelevanten Folge einer Zellenkennung entspricht; und mindestens eine Zellenkennung bestimmt, die einer Positionsnummer von Zeitdomänendaten in der kombinierten zeitdomänenrelevanten Folge entspricht, die eine vorgegebene Bedingung erfüllt, wobei das vorgegebene Kombinationsverfahren umfasst: ein Gewinn-Gleich-Kombinationsverfahren oder ein Maximalverhältnisverfahren, wobei, wenn das vorgegebene Kombinationsverfahren das Gewinn-Gleich-Kombinationsverfahren ist, der Kombinationskoeffizientenfaktor $\lambda_k^t = \frac{1}{T}$ ist, wobei t die Seriennummer der Empfangsantenne auf dem Endgerät ist, $1 \leq t \leq T$, t eine ganze Zahl ist, und T die Nummer der Empfangsantenne auf dem Endgerät ist; und, wenn das vorgegebene Kombinationsverfahren das Maximalverhältnisverfahren ist, der Kombinationskoeffizientenfaktor proportional zum Signal-Rausch-Verhältnis von Datenempfang jedes Endes ist;

wobei die Zeitdomänendaten in der kombinierten zeitdomänenrelevanten Folge, welche die vorgegebene Bedingung erfüllen, verkörpert sind als:

die Zeitdomänendaten, deren Wert größer als eine Nachbarzellen-Entscheidungsschwelle ist, und deren Positionsnummer nicht gleich der Kennung der Zelle ist, in der sich das Endgerät befindet, wobei die Nachbarzellen-Entscheidungsschwelle das Produkt eines Koeffizienten α und eines relevanten Koeffizienten der Zelle ist, in der sich das Endgerät befindet, wobei es sich bei dem Koeffizienten α um Daten handelt, die größer als 0 und kleiner als 1 sind, und wobei es sich bei dem relevanten Koeffizienten der Zelle, in der sich das Endgerät befindet, um Zeitdomänendaten in der kombinierten zeitdomänenrelevanten Folge handelt;

Schritt 4 (Schritt 14), das Endgerät mindestens eine Zelle, die der Zellenkennung entspricht, als die Nachbarzelle einer Zelle bestimmt, in der sich das Endgerät befindet;

**dadurch gekennzeichnet, dass** das Endgerät mindestens eine Zelle, die der Zellenkennung entspricht, die der Positionsnummer der Zeitdomänendaten in der kombinierten zeitdomänenrelevanten Folge entspricht, welche die vorgegebene Bedingung erfüllen, als die Nachbarzelle der Zelle bestimmt, in der sich das Endgerät befindet, und die Zellenkennung zu einer Nachbarzellenkennungsliste hinzufügt; oder

Schritt 1 bis Schritt 4 für Daten, die durch jede Empfangsantenne zu verschiedenen Zeitpunkten empfangen werden, L Male wiederholt werden; mindestens eine Nachbarzelle, die der Zellenkennung entspricht, die L Male wiederholt auftritt, als die Nachbarzelle der Zelle bestimmt wird, in der sich das Endgerät befindet; und die Zellenkennung, die L Male wiederholt aufgetreten ist, zur Nachbarzellenkennungsliste hinzugefügt wird.

2. Verfahren zur automatischen Suche und Bestimmung der Nachbarzelle durch das Endgerät in einem LTE-System nach Anspruch 1, **dadurch gekennzeichnet, dass** das Abfangen für jede Empfangsantenne des Endgeräts selbst der Daten-Sekundärsynchronisationsfolge, die durch die Empfangsantenne auf dem Downlink-Sekundärsynchronisationskanal empfangen wird, und Nehmen der abgefangenen Daten als die Antennendaten der Empfangsantenne durch das Endgerät umfasst, dass:

das Endgerät für jede Empfangsantenne des Endgeräts selbst Zeitdomänenabfang an der Daten-Sekundärsynchronisationsfolge, die in der Position des Downlink-Sekundärsynchronisationskanals durch die Empfangsantenne empfangen wird, durchführt und die abgefangenen Daten als erste Abfangdaten nimmt; Frequenzdomänenabfang an den ersten Abfangdaten unter Verwendung eines Tiefpassfilters durchgeführt wird, und die abgefangenen Daten als zweite Abfangdaten genommen werden; und ein Segment von Daten, dessen Länge eine vorgegebene Datenlänge ist, aus den zweiten Abfangdaten abgefangen und als die Antennendaten der Empfangsantenne genommen wird.

3. Verfahren zur automatischen Suche und Bestimmung der Nachbarzelle durch das Endgerät in einem LTE-System nach Anspruch 2, **dadurch gekenn-**

**zeichnet, dass** die Normalisierungsoperation gemäß der folgenden Formel durchgeführt wird:

$$Cor_k^t = \frac{\left|\sum_{m=1}^{M} r_t^*(m) \cdot S_k(m)\right|}{\sqrt{\sum_{m=1}^{M}|r_t(m)|^2 \cdot \sum_{m=1}^{M}|S_k(m)|^2}}$$ wobei $Cor_k^t$ die

zeitdomänenrelevanten Folgen sind, die nach dem Durchführen der Normalisierungsoperation an den zweiten Zeitdomänendaten mit den ersten Zeitdomänendaten erhalten werden; $1 \leq k \leq 504$, und k eine ganze Zahl ist; t die Seriennummer der Empfangsantenne auf dem Endgerät ist, $1 \leq t \leq T$, und t eine ganze Zahl ist; T die Nummer der Empfangsantenne auf dem Endgerät ist; r die ersten Zeitdomänendaten sind; M das Verhältnis der Länge der Daten zur Anzahl von Abtastwerten ist, das bei Abtastung angewendet wird; und $S_k$ die zweiten Zeitdomänendaten sind.

4. Verfahren zur automatischen Suche und Bestimmung der Nachbarzelle durch das Endgerät in einem LTE-System nach Anspruch 1, **dadurch gekennzeichnet, dass** das Kombinieren der erhaltenen zeitdomänenrelevanten Folgen gemäß dem vorgegebenen Kombinationsverfahren durch das Endgerät zum Erhalten der kombinierten zeitdomänenrelevanten Folge umfasst:

   Durchführen einer gewichteten Kombination an den zeitdomänenrelevanten Folgen gemäß der folgenden Formel, um die kombinierte zeitdomänenrelevante Folge $R_k$ zu erhalten:

$$R_k = \sum_{t=1}^{T} \lambda_k^t Cor_k^t$$ wobei $1 \leq k \leq 504$, und k eine ganze

   Zahl ist; $Cor_k^t$ die zeitdomänenrelevanten Folgen sind, die nach dem Durchführen der Normalisierungsoperation an den zweiten Zeitdomänendaten mit den ersten Zeitdomänendaten erhalten werden.

5. Verfahren zur automatischen Suche und Bestimmung der Nachbarzelle durch das Endgerät in einem LTE-System nach Anspruch 1, **dadurch gekennzeichnet, dass** die Zellenkennung, die der Positionsnummer der Zeitdomänendaten entspricht, die Zellenkennung der Zelle ist, in der sich das Endgerät befindet.

6. Endgerät, umfassend:

   ein Abfangmodul (31), das so konfiguriert ist, dass es für jede Empfangsantenne des Endgeräts eine Daten-Sekundärsynchronisationsfolge, die durch die Empfangsantenne auf einem Downlink-Sekundärsynchronisationskanal empfangen wird, abfängt und die abgefangenen Daten als Antennendaten der Empfangsantenne nimmt, die Antennendaten abtastet und die abgetasteten Daten als erste Zeitdomänendaten nimmt;

ein Umwandlungsmodul (32), das so konfiguriert ist, dass es Daten-Sekundärsynchronisationsfolgen, die durch das Endgerät vorgespeichert werden, unter Verwendung einer Fourier-Transformation in Zeitdomänen-Sekundärsynchronisationsfolgen umwandelt;

ein Abtastmodul (33), das so konfiguriert ist, dass es für jede Zeitdomänen-Sekundärsynchronisationsfolge die Zeitdomänen-Sekundärsynchronisationsfolge abtastet und die abgetasteten Daten als zweite Zeitdomänendaten der Zeitdomänen-Sekundärsynchronisationsfolge nimmt;

ein Operationsmodul (34), das so konfiguriert ist, dass es für alle zweiten Zeitdomänendaten jeweils eine Normalisierungsoperation an den zweiten Zeitdomänendaten mit allen ersten Zeitdomänendaten durchführt und zeitdomänenrelevante Folgen erhält;

ein Kombinationsmodul (35), das so konfiguriert ist, dass es die erhaltenen zweitdomänenrelevanten Folgen gemäß einem vorgegebenen Kombinationsverfahren kombiniert, um eine kombinierte zeitdomänenrelevante Folge zu erhalten, wobei eine Positionsnummer von Zeitdomänendaten in der kombinierten zeitdomänenrelevanten Folge einer Zellenkennung entspricht,

wobei das vorgegebene Kombinationsverfahren umfasst: ein Gewinn-Gleich-Kombinationsverfahren oder ein Maximalverhältnisverfahren, wobei, wenn das vorgegebene Kombinationsverfahren das Gewinn-Gleich-Kombinationsverfahren ist, der Kombinationskoeffizienten-

faktor $\lambda_k^t = \frac{1}{T}$ ist, ist, wobei t die Seriennummer der Empfangsantenne auf dem Endgerät ist, $1 \leq t \leq T$, t eine ganze Zahl ist, und T die Nummer der Empfangsantenne auf dem Endgerät ist; und, wenn das vorgegebene Kombinationsverfahren das Maximalverhältnisverfahren ist, der Kombinationskoeffizientenfaktor proportional zum Signal-Rausch-Verhältnis von Datenempfang jedes Endes ist;

ein Kennungsbestimmungsmodul (36), das so konfiguriert ist, dass es mindestens eine Zellenkennung bestimmt, die einer Positionsnummer von Zeitdomänendaten in der kombinierten zeitdomänenrelevanten Folge entspricht, welche eine vorgegebene Bedingung erfüllen, wobei das Kennungsbestimmungsmodul (36) ferner so konfiguriert ist, dass es die Zeitdomänendaten, deren Wert größer als eine Nachbarzellen-Entscheidungsschwelle ist, und deren Positionsnummer nicht gleich der Kennung der Zelle ist, in der sich das Endgerät befindet, in der kombinierten zeitdomänenrelevanten Folge bestimmt, wobei die Nachbarzellen-Entscheidungsschwelle das Produkt eines Koeffizienten $\alpha$ und eines relevanten Koeffizienten der Zelle ist, in der sich das Endgerät befindet, wobei es sich bei dem Koeffizienten $\alpha$ um Daten handelt, die größer als 0 und kleiner als 1 sind, und wobei es sich bei dem relevanten Koeffizienten der Zelle, in der sich das Endgerät befindet, um Zeitdomänendaten in der kombinierten zeitdomänenrelevanten Folge handelt; und

ein Bestimmungsmodul (37), das so konfiguriert ist, dass es mindestens eine Zelle, die der Zellenkennung entspricht, als die Nachbarzelle einer Zelle bestimmt, in der sich das Endgerät befindet;

**dadurch gekennzeichnet, dass** das Bestimmungsmodul (37) so konfiguriert ist, das es mindestens eine Zelle, die der Zellenkennung entspricht, die der Positionsnummer der Zeitdomänendaten in der kombinierten zeitdomänenrelevanten Folge entspricht, welche die vorgegebene Bedingung erfüllen, als die Nachbarzelle der Zelle bestimmt, in der sich das Endgerät befindet, und die Zellenkennung zu einer Nachbarzellenkennungsliste hinzufügt; oder wobei für Daten, die durch jede Empfangsantenne zu verschiedenen Zeitpunkten empfangen werden, nach wiederholtem Durchführen der Suche oder Bestimmung der Nachbarzelle für L Male mindestens eine Nachbarzelle, die der Zellenkennung entspricht, die L Male wiederholt aufgetreten ist, als die Nachbarzelle der Zelle bestimmt wird, in der sich das Endgerät befindet; und die Zellenkennung, die L Male wiederholt aufgetreten ist, zur Nachbarzellenkennungsliste hinzugefügt wird.

7. Endgerät nach Anspruch 6, **dadurch gekennzeichnet, dass** das Abfangmodul umfasst:

eine erstes Abfangmodul (41), das so konfiguriert ist, dass es für jede Empfangsantenne des Endgeräts Zeitdomänenabfang an der Daten-Sekundärsynchronisationsfolge, die in der Position des Downlink-Sekundärsynchronisationskanals durch die Empfangsantenne empfangen wird, durchführt und die abgefangenen Daten als erste Abfangdaten nimmt;

ein zweites Abfangmodul (42), das so konfiguriert ist, dass es Frequenzdomänenabfang an den ersten Abfangdaten durchführt und die abgefangenen Daten als zweite Abfangdaten nimmt; und

ein drittes Abfangmodul (43), das so konfiguriert ist, dass es ein Segment von Daten, dessen Länge eine vorgegebene Datenlänge ist, aus den zweiten Abfangdaten als die Antennendaten der Empfangsantenne abfängt.

8. Endgerät nach Anspruch 6, **dadurch gekennzeichnet, dass** das Operationsmodul (34) so konfiguriert ist, dass es für alle zweiten Zeitdomänendaten jeweils eine Normalisierungsoperation an den zweiten Zeitdomänendaten mit allen ersten Zeitdomänendaten gemäß der folgenden Formel durchführt, um eine zeitdomänenrelevante Folge $Cor_k^t$ zu erhalten:

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}} \quad \text{wobei } 1 \leq k \leq 504,$$

und k eine ganze Zahl ist; t die Seriennummer der Empfangsantenne auf dem Endgerät ist, $1 \leq t \leq T$, und t eine ganze Zahl ist; T die Nummer einer Empfangsantenne des Endgeräts ist; r die ersten Zeitdomänendaten sind; M das Verhältnis der Länge der Daten zur Anzahl von Abtastwerten ist, das bei Abtastung angewendet wird; und Sk die zweiten Zeitdomänendaten sind.

9. Endgerät nach Anspruch 6, **dadurch gekennzeichnet, dass** das Kombinationsmodul (35) so konfiguriert ist, dass es eine gewichtete Kombination an den zeitdomänenrelevanten Folgen gemäß der folgenden Formel durchführt, um die kombinierte zeitdomänenrelevante Folge Rk zu erhalten:

$$R_k = \sum_{t=1}^{T} \lambda_k^t Cor_k^t \quad \text{wobei } 1 \leq k \leq 504, \text{ und k eine ganze}$$

Zahl ist; $Cor_k^t$ die zeitdomänenrelevanten Folgen sind, die nach dem Durchführen der Normalisierungsoperation an den zweiten Zeitdomänendaten mit den ersten Zeitdomänendaten erhalten werden.

10. Endgerät nach Anspruch 6, **dadurch gekennzeichnet, dass** die Zellenkennung, die der Positionsnummer der Zeitdomänendaten entspricht, die Zellenkennung der Zelle ist, in der sich die Zelle befindet.

## Revendications

1. Procédé pour rechercher et déterminer automatiquement une cellule voisine par un terminal dans un système LTE, comprenant :

une étape (1) (étape 11), pour chaque antenne de réception du terminal lui-même, dans laquelle le terminal intercepte une séquence de synchronisation secondaire de données reçue sur un canal de synchronisation secondaire en liaison descendante par l'antenne de réception et prend les données interceptées comme des données d'antenne de l'antenne de réception, échantillonne les données d'antenne et prenant les données échantillonnées comme des premières données de domaine temporel ; convertit des séquences de synchronisation secondaire de données pré-mémorisées par le terminal en séquences de synchronisation secondaires de domaine temporel en utilisant une transformée de Fourier ; pour chaque séquence de synchronisation secondaire de domaine temporel, il échantillonne la séquence de synchronisation secondaire de domaine temporel et prend les données échantillonnées comme des deuxièmes données de domaine temporel de la séquence de synchronisation secondaire de domaine temporel ;

une étape 2 (étape 12), pour chacune des deuxièmes données de domaine temporel, dans laquelle le terminal effectue une opération de normalisation sur les deuxièmes données de domaine temporel respectivement avec chacune des premières données de domaine temporel, et le terminal obtient des séquences pertinentes de domaine temporel ;

une étape 3 (étape 13) dans laquelle, conformément à un procédé de combinaison préétabli, le terminal combine les séquences pertinentes de domaine temporel obtenues pour obtenir une séquence pertinente de domaine temporel combinée, dans laquelle le numéro de position des données de domaine temporel dans la séquence pertinente de domaine temporel combinée correspond à un identifiant de cellule ; et détermine au moins un identifiant de cellule correspondant à un numéro de position de données de domaine temporel, qui satisfait à une condition préétablie, dans la séquence pertinente de domaine temporel combinée,

dans lequel le procédé de combinaison préétabli comprend : un procédé de combinaison de gain égal ou un procédé de combinaison de rapport maximal, et quand le procédé de combinaison préétabli est le procédé de combinaison de gain égal, le facteur de coefficient de combinaison

est $\lambda_k^t = \frac{1}{T}$, où t est le numéro de série de l'antenne de réception sur le terminal, $1 \le t \le T$, t est un entier, et T est le numéro de l'antenne de réception sur le terminal ; et quand le procédé de combinaison préétabli est le procédé de combinaison de rapport maximal, le facteur de coefficient de combinaison est proportionnel au rapport signal-bruit de réception de données de chaque extrémité ;

dans lequel les données de domaine temporel, qui satisfont à la condition préétablie, dans la séquence pertinente de domaine temporel combinée, se présentent sous cette forme :

les données de domaine temporel dont la valeur est supérieure à un seuil de décision de cellule voisine, et dont le numéro de position n'est pas égal à l'identifiant de la cellule où se trouve le terminal, où le seuil de décision de cellule voisine est le produit d'un coefficient $\alpha$ et d'un coefficient pertinent de la cellule où se trouve le terminal, le coefficient $\alpha$ représentant des données supérieures à 0 et inférieures à 1, et le coefficient pertinent de la cellule où se trouve le terminal représentant les données de domaine temporel dans la séquence pertinente de domaine temporel combinée ; et

une étape 4 (étape 14), dans laquelle le terminal détermine qu'au moins une cellule correspondant à l'identification de cellule est la cellule voisine d'une cellule où se trouve le terminal ;

**caractérisé en ce que** le terminal détermine qu'au moins une cellule, correspondant à l'identifiant de cellule qui correspond au numéro de position des données de domaine temporel, qui satisfait à la condition préétablie, dans la séquence pertinente de domaine temporel combinée, est la cellule voisine de la cellule où se trouve le terminal, et ajoute l'identifiant de cellule à une liste d'identifiants de cellules voisines ; ou

pour des données reçues à différents moments par chaque antenne de réception, les étapes 1 à 4 sont répétées L fois ; au moins une cellule voisine correspondant à l'identifiant de cellule, qui apparaît de façon répétée L fois, est déterminée comme étant la cellule voisine de la cellule où se trouve le terminal ; et l'identifiant de cellule qui est apparu de façon répétée L fois est ajouté à la liste d'identifiants de cellules voisines.

**2.** Procédé pour rechercher et déterminer automatiquement une cellule voisine par un terminal dans un système LTE selon la revendication 1, **caractérisé en ce que**, pour chaque antenne de réception du terminal lui-même, le terminal interceptant la séquence de synchronisation secondaire de données reçue sur le canal de synchronisation secondaire en liaison descendante par l'antenne de réception et prenant les données interceptées comme des données d'antenne de l'antenne de réception comprend ce qui suit :

pour chaque antenne de réception du terminal lui-même, le terminal effectue une interception de domaine temporel sur la séquence de synchronisation secondaire de données reçue sur la position du canal de synchronisation secondaire en liaison descendante par l'antenne de réception, et prend les données interceptées comme des premières données d'interception ; l'interception de domaine de fréquence est effectuée sur les premières données d'interception par utilisation d'un filtre passe-bas, et les données interceptées sont prises comme des deuxièmes données d'interception ; et un segment de données, dont la longueur est une longueur de données préétablie, est intercepté à partir des deuxièmes données d'interception et est pris comme les données d'antenne de l'antenne de réception.

3. Procédé pour rechercher et déterminer automatiquement une cellule voisine par un terminal dans un système LTE selon la revendication 2, **caractérisé en ce que** l'opération de normalisation est effectuée conformément à la formule suivante :

$$Cor_k^t = \frac{\left|\sum_{m=1}^{M} r_t^*(m) \cdot S_k(m)\right|}{\sqrt{\left|\sum_{m=1}^{M} r_t(m)\right|^2 \cdot \left|\sum_{m=1}^{M} S_k(m)\right|^2}},$$

où $Cor_k^t$ représente les séquences pertinentes de domaine temporel obtenues après que l'opération de normalisation a été effectuée sur les deuxièmes données de domaine temporel avec les premières données de domaine temporel ; $1 \leq k \leq 504$, et k est un entier ; t est le numéro de série de l'antenne de réception sur le terminal, $1 \leq t \leq T$, et t est un entier ; T est le numéro de l'antenne de réception sur le terminal ; r représente les premières données de domaine temporel ; M est le rapport de la longueur des données au nombre d'échantillons adopté lors de l'échantillonnage ; et $S_k$ représente les deuxièmes données de domaine temporel.

4. Procédé pour rechercher et déterminer automatiquement une cellule voisine par un terminal dans un système LTE selon la revendication 1, **caractérisé en ce que** le terminal combinant les séquences pertinentes de domaine temporel obtenues conformément au procédé de combinaison préétabli pour que soit obtenue la séquence pertinente de domaine temporel combinée comprend ce qui suit :
la réalisation d'une combinaison pondérée sur les séquences pertinentes de domaine temporel conformément à la formule qui suit pour que soit obtenue la séquence pertinente de domaine temporel combinée $R_k$ :

$$R_k = \sum_{t=1}^{T} \lambda_k^t Cor_k^t,$$

où $1 \leq k \leq 504$, et k est un entier ; $Cor_k^t$ représente les séquences pertinentes de domaine temporel obtenues après que l'opération de normalisation a été effectuée sur les deuxièmes données de domaine temporel avec les premières données de domaine temporel.

5. Procédé pour rechercher et déterminer automatiquement une cellule voisine par un terminal dans un système LTE selon la revendication 1, **caractérisé en ce que** l'identifiant de cellule correspondant au numéro de position des données de domaine temporel est l'identifiant de cellule de la cellule où se trouve le terminal.

6. Terminal comprenant :

un module d'interception (31) configuré, pour chaque antenne de réception du terminal, pour intercepter une séquence de synchronisation secondaire de données reçue sur un canal de synchronisation secondaire en liaison descendante par l'antenne de réception et pour prendre les données interceptées comme des données d'antenne de l'antenne de réception, pour échantillonner les données d'antenne et pour prendre les données échantillonnées comme des premières données de domaine temporel ;
un module de conversion (32) configuré pour convertir des séquences de synchronisation secondaire de données pré-mémorisées par le terminal en séquences de synchronisation secondaires de domaine temporel en utilisant une transformée de Fourier ;
un module d'échantillonnage (33) configuré, pour chaque séquence de synchronisation secondaire de domaine temporel, pour échantillonner la séquence de synchronisation secondaire de domaine temporel et pour prendre les données échantillonnées comme des deuxièmes données de domaine temporel de la séquence de synchronisation secondaire de domaine temporel ;
un module d'opération (34) configuré, pour chacune des deuxièmes données de domaine temporel, pour effectuer une opération de normalisation sur les deuxièmes données de domaine temporel respectivement avec chacune des premières données de domaine temporel, et pour obtenir des séquences pertinentes de domaine temporel ;
un module de combinaison (35) configuré pour combiner les séquences pertinentes de domaine temporel obtenues conformément à un procédé de combinaison préétabli pour obtenir une séquence pertinente de domaine temporel combinée, où le numéro de position des données de domaine temporel dans la séquence pertinente de domaine temporel combinée correspond à un identifiant de cellule ;

dans lequel le procédé de combinaison préétabli comprend : un procédé de combinaison de gain égal ou un procédé de combinaison de rapport maximal, et quand le procédé de combinaison préétabli est le procédé de combinaison de gain égal, le facteur de coefficient de combinaison est $\lambda_k^t = \frac{1}{T}$, où t est le numéro de série de l'antenne de réception sur le terminal, $1 \le t \le T$, t est un entier, et T est le numéro de l'antenne de réception sur le terminal ; et quand le procédé de combinaison préétabli est le procédé de combinaison de rapport maximal, le facteur de coefficient de combinaison est proportionnel au rapport signal-bruit de réception de données de chaque extrémité ;

un module de détermination d'identifiant (36) configuré pour déterminer au moins un identifiant de cellule correspondant à un numéro de position des données de domaine temporel, qui satisfait à une condition préétablie, dans la séquence pertinente de domaine temporel combinée, lequel module de détermination d'identifiant (36) est en outre configuré pour déterminer les données de domaine temporel, dans la séquence pertinente de domaine temporel combinée, dont la valeur est supérieure à un seuil de décision de cellule voisine, et dont numéro de position n'est pas égal à l'identifiant de la cellule où se trouve le terminal, où le seuil de décision de cellule voisine est le produit d'un coefficient $\alpha$ et d'un coefficient pertinent de la cellule où se trouve le terminal, le coefficient $\alpha$ représentant des données supérieures à 0 et inférieures à 1, et le coefficient pertinent de la cellule où se trouve le terminal représentant les données de domaine temporel dans la séquence pertinente de domaine temporel combinée ; et

un module de détermination (37) configuré pour déterminer qu'au moins une cellule correspondant à l'identification de cellule est la cellule voisine d'une cellule où se trouve le terminal ; **caractérisé en ce que** le module de détermination (37) est configuré pour déterminer qu'au moins une cellule, correspondant à l'identifiant de cellule qui correspond au numéro de position des données de domaine temporel, qui satisfait à la condition préétablie, dans la séquence pertinente de domaine temporel combinée, est la cellule voisine de la cellule où se trouve le terminal, et pour ajouter l'identifiant de cellule à une liste d'identifiants de cellules voisines ; ou, pour des données reçues à différents moments par chaque antenne de réception, après que l'opération de recherche ou de détermination de la cellule voisine a été effectuée de façon répétée L fois, au moins une cellule voisine correspondant à l'identifiant de cellule qui est apparu de façon répétée L fois, est déterminée comme étant la cellule voisine de la cellule où se trouve le terminal ; et l'identifiant de cellule, qui est apparu de façon répétée L fois, est ajouté à la liste d'identifiants de cellules voisines.

**7.** Terminal selon la revendication 6, **caractérisé en ce que** le module d'interception comprend :

un premier module d'interception (41) configuré pour effectuer, pour chaque antenne de réception du terminal, l'interception d'un domaine temporel sur la séquence de synchronisation secondaire de données reçue sur la position du canal de synchronisation secondaire en liaison descendante par l'antenne de réception, et pour prendre les données interceptées comme des premières données d'interception ;

un deuxième module d'interception (42) configuré pour effectuer l'interception du domaine de fréquence sur les premières données d'interception, et pour prendre les données interceptées comme des deuxièmes données d'interception ; et

un troisième module d'interception (43) configuré pour intercepter un segment de données, dont la longueur est une longueur de données préétablie, à partir des deuxièmes données d'interception en tant que données d'antenne de l'antenne de réception.

**8.** Terminal selon la revendication 6, **caractérisé en ce que** le module d'opération (34) est configuré, pour chaque deuxième séquence de domaine temporel, pour effectuer une opération de normalisation sur les deuxièmes données de domaine temporel respectivement avec chacune des premières données de domaine temporel conformément à la formule suivante pour obtenir une séquence pertinente de domaine temporel $Cor_k^t$ ;

$$Cor_k^t = \frac{\left| \sum_{m=1}^{M} r_t^*(m) \cdot S_k(m) \right|}{\sqrt{\left| \sum_{m=1}^{M} r_t(m) \right|^2 \cdot \left| \sum_{m=1}^{M} S_k(m) \right|^2}} ,$$

où $1 \leq k \leq 504$, et k est un entier ; t est le numéro de série de l'antenne de réception sur le terminal, $1 \leq t \leq T$, et t est un entier ; T est le numéro de l'antenne de réception sur le terminal ; r représente les premières données de domaine temporel ; M est le rapport de la longueur des données au nombre d'échantillons adopté lors de l'échantillonnage ; et $S_k$ représente les deuxièmes données de domaine temporel.

**9.** Terminal selon la revendication 6, **caractérisé en ce que** le module de combinaison (35) est configuré pour effectuer une combinaison pondérée sur les séquences pertinentes de domaine temporel conformément à la formule qui suit pour obtenir la séquence pertinente de domaine temporel combinée $R_k$ :

$$R_k = \sum_{t=1}^{T} \lambda_k^t Cor_k^t \, ,$$

où $1 \leq k \leq 504$, et k est un entier ; $Cor_k^t$ représente les séquences pertinentes de domaine temporel obtenues après que l'opération de normalisation a été effectuée sur les deuxièmes données de domaine temporel avec les premières données de domaine temporel.

**10.** Terminal selon la revendication 6, **caractérisé en ce que** l'identifiant de cellule correspondant au numéro de position des données de domaine temporel est l'identifiant de cellule de la cellule où se trouve le terminal.

The terminal intercepts a data secondary synchronization sequence received on a downlink secondary synchronization channel by a reception antenna and takes the intercepted and sampled data as first time domain data; the terminal converts data secondary synchronization sequences pre-stored by itself into time domain secondary synchronization sequences; and samples the time domain secondary synchronization sequences, and takes the sampled data as second time domain data

11

For each second time domain data, the terminal performs a normalization operation on the second time domain data respectively with each first time domain data, and obtains time domain relevant sequences

12

The terminal combines the time domain relevant sequences to obtain a combined time domain relevant sequence, and determines at least one cell identifier corresponding to the position number of the time domain data satisfying a preset condition in the combined time domain relevant sequence

13

The terminal determines at least one cell corresponding to the cell identifier to be a neighbor cell of the cell where the terminal is located

14

# Fig. 1

**Fig. 2**

Fig. 3

First interception module41

Second interception module42

Third interception module43

First sampling module44

Fig. 4

**EP 2 725 828 B1**

REFERENCES CITED IN THE DESCRIPTION

**Patent documents cited in the description**

- US 2009323855 A